Europäisches Patentamt

European Patent Office

Office européen des brevets

(11) Publication number: **0 023 760**
**B1**

# EUROPEAN PATENT SPECIFICATION

(45) Date of publication of patent specification: **29.02.84**

(51) Int. Cl.³: **A 01 K 5/02**

(21) Application number: **80302110.4**

(22) Date of filing: **24.06.80**

(54) Method of and apparatus for feeding hogs.

(30) Priority: **03.08.79 US 63425**

(43) Date of publication of application:
**11.02.81 Bulletin 81/6**

(45) Publication of the grant of the patent:
**29.02.84 Bulletin 84/9**

(84) Designated Contracting States:
**BE DE FR GB IT NL SE**

(56) References cited:
**DE - A - 1 924 124**
**DE - A - 2 509 954**
**DE - C - 614 137**
**US - A - 3 026 845**
**US - A - 3 150 798**

(73) Proprietor: **CHORE-TIME EQUIPMENT, INC.**
**State Road 15**
**Milford Indiana 46542 (US)**

(72) Inventor: **Van Gilst, Carl Wayne**
**62512 CR 17**
**Goshen Indiana 46526 (US)**
Inventor: **Donahoe, Bradley Eugene**
**58463 Oakwood Ct.**
**Elkhart Indiana 46514 (US)**
Inventor: **Brembeck, Howard Speicher**
**2808 Martin Manor Drive**
**Goshen Indiana 46526 (US)**

(74) Representative: **Waite, Anthony William et al,**
**Marks & Clerk Alpha Tower Suffolk Street**
**Queensway**
**Birmingham B1 1TT (GB)**

Courier Press, Leamington Spa, England.

## Method of and apparatus for feeding hogs

This invention relates generally to methods and apparatus for feeding hogs, and more particularly concerns methods and apparatus for feeding hogs which provide improvements in hog growth rate, while also improving the yield; that is, improving the ratio of feed delivered to hog weight added.

Hog husbandry has been practiced by mankind for thousands of years. In the relatively recent past, systematic, scientific attempts have been made to raise hogs from sucklings or weaners to fully adult size as rapidly as possible, and with the minimum amount of feed. In this way, the maximum number of hogs are produced during a given period of time with minimum feed and other expenses. Since feed costs presently represent approximately 70% of the total cost of producing pork, the development of feeding systems and methods which maximize feed efficiency without sacrificing growth rate—or, indeed, which actually improve growth rate—will be of great benefit to hog husbandmen. U.S. Specification No. 3026845 illustrates one form of apparatus for automatically feeding livestock which aims to increase feeding efficiency.

Generally speaking, hog feeding plans can be divided into three general classes. These include:

1) Random feeding. In this regimen, hogs are provided with quantities of feed at times decided upon without regard to animal growth. These times may be, for example, any time the swineherd can find food for his animals, as is sometimes the case in Third World countries. Sometimes more feed is provided than the hogs can consume, and sometimes less feed is provided. Sometimes, irregular amounts of feed are provided at regular intervals set for the convenience of the swineherd, or for other convenient reasons. In such regimens, the basic fact that hogs must eat to live and grow is recognized, but little further feed planning is done.

2) Ad Libitum feeding. In this methodology, hogs are permitted free access to feed at all times. The feed providing troughs or areas are always kept at least partially filled with feed so that the hogs can eat as much feed as they wish to consume at any time.

3) Limit feeding. In this methodology, specific quantities of feed are provided to hogs at specific intervals of time. In accordance with previous hog growth and care research, these quantities of feed are always less than the hogs desire, or could consume. Some programs deliver the feed rations at specific moments, and permit the hogs to consume the rations whenever they wish.

Under at least some of these feeding schemes, water has also been provided to the animals. Normally, unlimited supplies of water are made available to the hogs at all times. Under some feeding plans, liquid has been mixed with the feed when it is delivered to form a gruel.

Research involving the feeding and care of poultry and other domesticated animals has been conducted, of course. While the purposes and results of some such research might first appear to be at least superficially similar to hog care research, such is not usually the case.

The great differences in animal anatomy, metabolism and digestive systems between hogs and most other animals makes the transfer of data and conclusions from research involving other animals to hog research and feeding programs an extremely dangerous step. Useful approaches taken in the feeding of other animals do not necessarily work when applied to hogs, and can, indeed, harm the hogs.

It is the general object of the present invention to provide improved methods and apparatus for feeding hogs.

More specifically, it is an object of the present invention to provide methods and apparatus for feeding hogs which will improve the growth rate of the hogs.

It is another object of the invention to provide methods and apparatus which will decrease the number of pounds of feed required to be fed to a given hog to provide a given number of pounds of weight gain in that hog.

It is a related object to provide improved methods and apparatus for hog feeding which will reduce the wastage of feed delivered to the hogs.

Other objects and advantages of the invention will become apparent upon reading the following detailed description and upon reference to the drawings. Throughout the drawings, like reference numerals refer to like parts.

Brief description of the drawings

Figure 1 is a perspective view showing a novel combined hog feeding and hog watering system which can be utilized to practice the novel feeding and watering methods of the present invention;

Figure 2 is a fragmentary side elevational view of a hog feeding trough and watering station and associated apparatus;

Figure 3 is a fragmentary elevational view in partial section showing portions of the feed delivery system; and

Figure 4 is a sectional view taken substantially in the plane of the line 4—4 in Figure 2 and showing in yet further detail the hog feeding the watering apparatus.

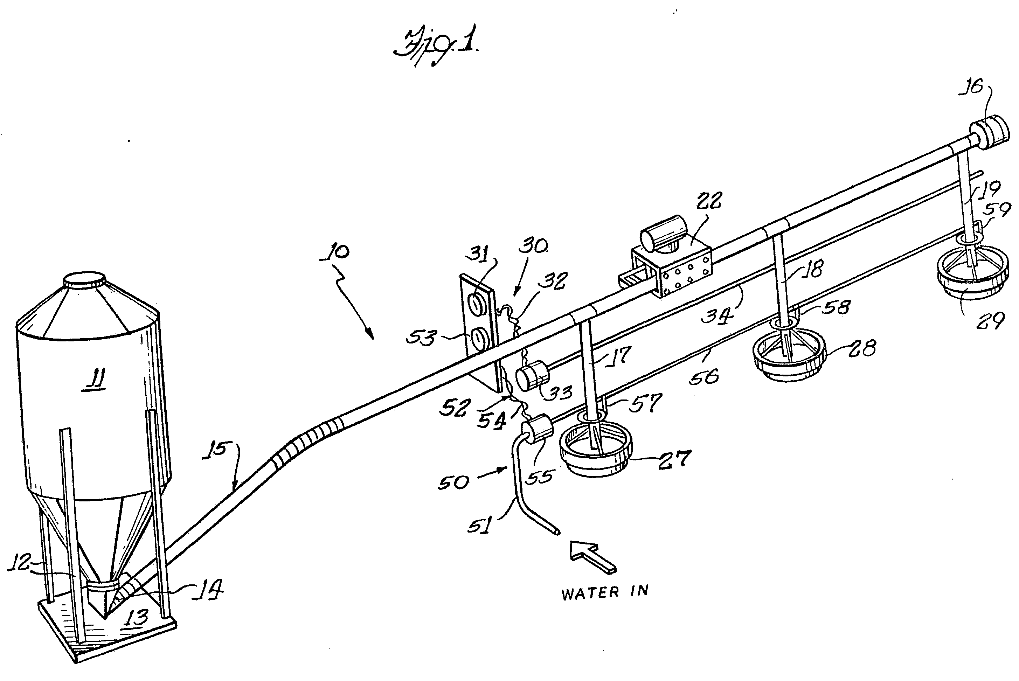

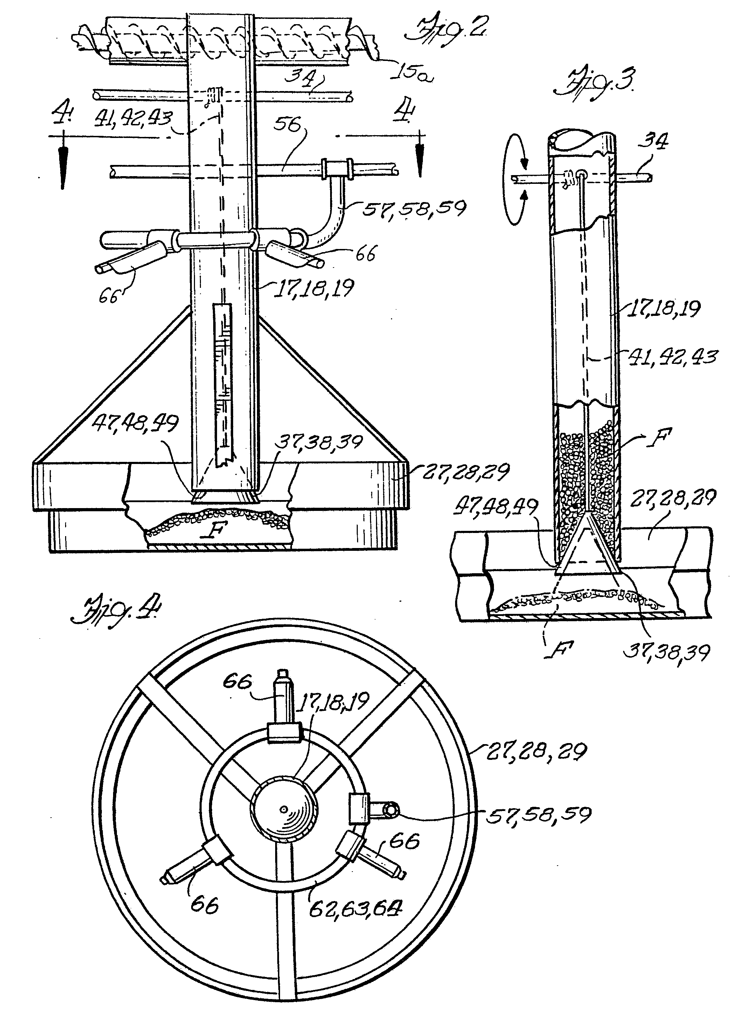

Turning first to Figure 1, there is shown the novel combination feeding and watering apparatus 10 embodying one aspect of the present invention. In general, this apparatus 10 includes a large storage bin 11, which here is carried by legs 12 upon a suitable foundation 13. At the bottom of this bin 11 is a boot 14, and extending from the boot 14 is a header conveyor 15. The conveyor 15 can be of the type which carries a rotatable auger member 15a (Figure 2) within a hollow conveyor tube. Here, this auger 15a is driven by an electric motor 16 or other suitable power source. Feed which is drawn from the bin 11 by the header conveyor 15 is delivered to drop tubes 17, 18 and 19. A box mechanism 22 can be provided to control feed flow over relatively long stretches of the conveyor 15.

As can be envisioned from Figures 1—3, feed discharge down the drop tubes 17, 18 and 19 flows to subjacent hog feeding troughs 27, 28 and 29. In accordance with one aspect of the invention, this feed delivery system has a high capacity so as to deliver at least as much feed to the feed troughs 27—29 as the hogs can consume from the troughs in a given period of time.

In accordance with the invention, this feed is delivered to the consumption troughs 27, 28, 29 on a predetermined time schedule. To this end, a feed delivery and delivery shut-off system 30 is interposed between the feed troughs 27—29 and the feed delivery conveyor 15 for alternately permitting and preventing delivery of feed to the feed troughs 27—29. Here the shut-off system 30 includes a timer 31 connected, as by wires 32, to an electric motor 33. The electric motor 33 drives a wind-up shaft 34. Below each tube 17—19, a cone-shaped feed delivery stop valve member 37—39 is provided, and is attached to the wind-up shaft 34 by a flexible rope or cord 41, 42 and 43. These cords 41, 42 and 43 are routed from the stop valve members through small apertures in the drop tubes 17, 18 and 19 to the shaft 34. When the motor 33 turns the wind-up shaft 34 at preselected times, the cords 41, 42 and 43 are simultaneously unwound off the shaft 34 and the stop members 37, 38 and 39 are taken away from the respective discharge openings 47, 48, 49 provided at the bottom of each of the drop tubes 17, 18 and 19. In this way, the feed F in the conveyor 15 and drop tubes 17—19 is rapidly discharged to the respective troughs 27—29 at a predetermined time. Later, the motor motion is reversed to pull the feed flow shut-off stopper 37—39 back to their closed positions. It will be understood that other embodiments of feed shut-off systems can be employed. For example, the valve cords 41, 42 and 43 could be attached to a master pull cord operated by a motor or other pull and release mechanism. Other convienient shut-off devices could be used.

In the preferred mode of operation, the conveyor motor 16 is first energized, and feed is drawn along the conveyor 15. Usually their action causes the upstream drop tube 17 to first fill with feed, and the second most upstream drop tube 18 next fills with feed. The downstream tube 19 is the last to be filled. It will be understood that this sereatum-order tube filling usually occurs regardless of the number of drop tubes to be filled by the conveyor, the filling order progressing from the first upstream tube to the last downstream tube. After all the tubes are filled, the timer 31 operates the tube valve motor 33. All the cone valves 37, 38 and 39 open simultaneously and feed is thus delivered to all the pans or troughs 27—29 simultaneously. In this way, the hogs are discouraged from rushing to the first or upstream pan 27 when feed delivery begins.

In carrying out this invention, an interrelated hog watering system 50 is included to still further improve hog development performance. The illustrated watering system includes a water delivery pipe 51 which is sized so as to deliver at least as much water to the hogs as the hogs can consume. A water shut-off system 52 is interposed within this pipeline 51. Here, the shut-off system 52 includes a timer 53 connected, as by wires 54, to a valve 55 interposed in the pipeline 51 so as to operate the shut-off valve 55 at predetermined times. Preferably, the shut-off valve 55 is operated to begin delivery of water before feed delivery starts, and to halt water delivery after feed delivery ends.

Water passing the valve 55 is routed to a downstream header pipe 56 and thence to drop tubes 57, 58 and 59. Water travelling down each of these drop tubes 57—59 flows to an endless ring 62, 63 and 64 and to nozzles 66.

It will be noted that these nozzles 66 are mounted directly above the feed pans or troughs 27—29. In this way, water from each nozzle falls into the subjacent trough to mix with the feed contained there. This water and feed mixing action provides a number of benefits. First, it inhibits loss of feed by bored hogs who might otherwise be tempted to play with the feed and throw feed out of the troughs. Second, this gruel mixture of feed and water may improve hog gain characteristics. Third, water which emanates from the nozzles 66 and is not consumed directly by the hogs is not wasted, as might be the case if the described nozzle trough relationships were not provided. Fourth, water spillage and consequent mess is minimized.

If desired, these nozzles 66 can be of the spray-head variety so as to deliver a spray of water directly to the hogs and to the feed during the entire time period when water is being provided through the shut-off valve 55. Alternatively, the nozzles 66 can be of the demand variety which permit delivery of water directly into the hog's mouth only when the hog actuates the valve.

The described apparatus can be used to provide a novel method of hog feeding and watering. This method encourages maximum feed utilization and more rapid hog weight gain than was heretofore believed possible. In accordance with this aspect of the invention, all the hogs are provided with all the feed they care to consume for a limited feeding period of time, and thereafter all the hogs are denied all access to any feed for a limited feedless period of time. Preferably, three feeding periods are alternated with three feedless periods each day until the weaner hogs have reached an approximate gross weight of 45.5 kg (100 pounds), and thereafter two feeding periods are alternated with two feedless periods each day until the hogs reach their finished or market weight.

More specifically, feed is delivered through the system so that all the hogs may eat as much feed as they wish to consume for about two hours. At the end of the feeding period, feed delivery through the system to the hogs is terminated. After the hogs have consumed any minor amount of feed remaining in the troughs, they can obtain no further feed for some six hours. At the expiration of this feedless time, feed is again provided for about two hours. A second feedless period of about six hours leads to a two hour feeding period. A last feedless period of six hours completes the day.

After the hogs have reached a weight of about 100 pounds, two feeding periods per day are provided, each period lasting about two hours. These two feeding periods are separated by feedless periods of about ten hours each. These feeding schedules are maintained over as many consecutive days as are required to reach the desired hog market weights. The feeding and feedless periods begin and end at the same time each day.

In carrying out the invention, all the hogs are provided with all the water they care to consume during each feeding period. All the hogs are denied any water during each feedless period.

In order to describe the invention even more fully, the nature and results of several experiments or test trials are discussed below. It will be understood that it is not intended to limit the scope of the invention to the following information.

The first trial test compared the performance of hogs fed on a three-feeding-per-day schedule versus the performance of hogs fed on a two-feedings-per-day schedule versus the performance of hogs fed on an *ad libitum* schedule. The performance of hogs fed with dry feed only was also compared to the performance of hogs to which water was made available to wet the feed. Results are shown in Tables I to IV.

TABLE I

Feed consumed and feed consumed per pound of hog weight gain—by period & cumulative

All data shown in pounds unless otherwise indicated (one pound=approximately 0.45 kilograms)

| | | Period I | | Period II | | | |
| | | Feed | | Feed consumed | | Feed/gain | |
| Feed regimen | Pen | consumed | Feed/gain | (period) | (cumm) | (period) | (cumm.) |
|---|---|---|---|---|---|---|---|
| 2×/day-wet | 1 | 456 | 3.04 | 591 | 1047 | 2.70 | 2.84 |
| (8am; 8pm) | 2 | 442 | 2.80 | 591 | 1033 | 2.55 | 2.65 |
| Average | | | 2.92 | | | 2.62 | 2.74 |
| Feed/pig/day | | 4.7 | | 5.3 | 5.0 | | |
| | | | | | | | |
| 3×/day-wet | 3 | 422 | 3.01 | 594 | 1016 | 2.75 | 2.85 |
| (8am; 4pm; 12am) | 4 | 422 | 2.89 | 594 | 1016 | 2.82 | 2.85 |
| Average | | | 2.95 | | | 2.78 | 2.85 |
| Feed/pig/day | | 4.4 | | 5.3 | 4.9 | | |
| Average-wet | | 4.5 | 2.94 | 5.3 | 5.0 | 2.70 | 2.80 |
| | | | | | | | |
| Ad limitum | 5 | 586 | 3.37 | 654 | 1240 | 2.68 | 2.97 |
| | 6 | 550 | 3.12 | 630 | 1180 | 2.90 | 3.00 |
| Average | | | 3.24 | | | 2.79 | 2.98 |
| Feed/pig/day | | 5.9 | | 5.7 | 5.8 | | |
| | | | | | | | |
| 3×/day-dry | 7 | 434 | 2.93 | 594 | 1028 | 2.80 | 2.86 |
| (8am; 4pm; 12am) | 8 | 431 | 3.04 | 594 | 1025 | 2.54 | 2.73 |
| Average | | | 2.98 | | | 2.67 | 2.80 |
| Feed/pig/day | | 4.5 | | 5.3 | 4.9 | | |
| | | | | | | | |
| 2×/day-dry | 9 | 440 | 2.86 | 591 | 1031 | 2.76 | 2.80 |
| (8am; 8pm) | 10 | 440 | 2.68 | 591 | 1031 | 2.87 | 2.79 |
| Average | | | 2.77 | | | 2.82 | 2.80 |
| Feed/pig/day | | 4.6 | | 5.3 | 5.0 | | |
| Average-dry | | 4.5 | 2.88 | 5.3 | 5.0 | 2.74 | 2.80 |

TABLE II
Feed consumed and feed consumed per pound of hog weight gain—by period & cumulative
All data are shown in pounds unless otherwise indicated (one pound=approximately 0.45 kilograms)

| Feed regimen | Pen | Period III Feed consumed (period) | (cumm.) | Feed gain (period) | (cumm.) | Period IV Feed consumed (period) | (cumm.) | Feed (period) | (cumm.) |
|---|---|---|---|---|---|---|---|---|---|
| 2×/day-wet | 1 | 706 | 1753 | 2.84 | 2.84 | 728 | 2481 | 2.91 | 2.86 |
| (8am; 8pm) | 2 | 706 | 1739 | 2.67 | 2.66 | 728 | 2467 | 3.14 | 2.78 |
| Average | | | | 2.76 | 2.75 | | | 3.02 | 2.82 |
| Feed/pig/day | | 6.3 | 5.5 | | | 6.5 | 5.7 | | |
| | | | | | | | | | |
| 3×/day-wet | 3 | 706 | 1722 | 2.94 | 2.89 | 728 | 2450 | 3.43 | 3.03 |
| (8am; 4pm; 12am) | 4 | 706 | 1722 | 3.06 | 2.93 | 728 | 2450 | 3.34 | 3.04 |
| Average | | | | 3.00 | 2.91 | | | 3.38 | 3.04 |
| Feed/pig/day | | 6.3 | 5.4 | | | 6.5 | 5.7 | | |
| Average-wet | | 6.3 | 5.4 | 2.88 | 2.83 | 6.5 | 5.7 | 3.20 | 2.93 |
| | | | | | | | | | |
| Ad libitum | 5 | 705 | 1945 | 2.67 | 2.85 | 685 | 2630 | 3.53 | 3.00 |
| | 6 | 660 | 1840 | 2.78 | 2.92 | 710 | 2550 | 4.13 | 3.18 |
| Average | | | | 2.72 | 2.88 | | | 3.83 | 3.09 |
| Feed/pig/day | | 6.1 | 5.9 | | | 6.2 | 6.0 | | |
| | | | | | | | | | |
| 3×/day-dry | 7 | 706 | 1734 | 2.87 | 2.86 | 728 | 2462 | 3.28 | 2.97 |
| (8am; 4pm; 12am) | 8 | 706 | 1731 | 2.94 | 2.81 | 728 | 2459 | 3.31 | 2.94 |
| Average | | | | 2.90 | 2.84 | | | 3.30 | 2.96 |
| Feed/pig/day | | 6.3 | 5.4 | | | 6.5 | 5.7 | | |
| | | | | | | | | | |
| 2×/day-dry | 9 | 706 | 1737 | 3.30 | 2.98 | 728 | 2465 | 3.37 | 3.09 |
| (8am; 8pm) | 10 | 706 | 1737 | 2.56 | 2.69 | 728 | 2465 | 3.60 | 2.91 |
| Average | | | | 2.93 | 2.84 | | | 3.48 | 3.00 |
| Feed/pig/day | | 6.3 | 5.4 | | | 6.5 | 5.7 | | |
| Average-dry | | 6.3 | 5.4 | 2.92 | 2.84 | 6.5 | 5.7 | 3.39 | 2.98 |

0 023 760

TABLE III
Average daily weight gain—by period and cumulative
All data are shown in pounds unless otherwise indicated (one pound=approximately 0.45 kilograms)

| Treatment | Pen | Period I 12/17 Wt. | 12/29 Wt. | A.D.G.* (Period) | Period II 1/12 Wt. | A.D.G.* (Period) | A.D.G.* (Cumm) |
|---|---|---|---|---|---|---|---|
| 2×/day-wet | 1 | 786 | 936 | 1.56 | 1155 | 1.96 | 1.77 |
| (8am; 8pm) | 2 | 702 | 860 | 1.65 | 1092 | 2.07 | 1.88 |
| Average/pig | | 93 | 112 | 1.60 | 140 | 2.01 | 1.82 |
| 3×/day-wet | 3 | 804 | 944 | 1.46 | 1160 | 1.93 | 1.71 |
| (8am; 4pm; 12am) | 4 | 804 | 950 | 1.52 | 1161 | 1.88 | 1.72 |
| Average/pig | | 100 | 118 | 1.49 | 145 | 1.91 | 1.71 |
| Average-wet | | | | 1.55 | | 1.96 | 1.77 |
| Ad libitum | 5 | 824 | 998 | 1.81 | 1242 | 2.18 | 2.01 |
| | 6 | 818 | 994 | 1.83 | 1211 | 1.94 | 1.89 |
| Average/pig | | 103 | 124 | 1.82 | 153 | 2.06 | 1.95 |
| 3×/day-dry | 7 | 818 | 966 | 1.54 | 1178 | 1.89 | 1.73 |
| (8am; 4pm; 12am) | 8 | 788 | 930 | 1.48 | 1164 | 2.09 | 1.81 |
| Average/pig | | 100 | 118 | 1.51 | 146 | 1.99 | 1.77 |
| 2×/day-dry | 9 | 790 | 944 | 1.60 | 1158 | 1.91 | 1.77 |
| (8am; 8pm) | 10 | 762 | 926 | 1.71 | 1132 | 1.84 | 1.78 |
| Average/pig | | 97 | 117 | 1.66 | 143 | 1.88 | 1.77 |
| Average-dry | | | | 1.58 | | 1.93 | 1.77 |

*Average Daily Gain

TABLE IV
Average daily weight gain—by period and cumulative
All data are shown in pounds unless otherwise indicated (one pound=approximately 0.45 kilograms)

| Treatment | Pen | Period III 1.26 Wt. | A.D.G.* (Period) | A.D.G.* (Cumm.) | Period IV 2/9 Wt. | A.D.G.* (Period) | A.D.G.* (Cumm.) |
|---|---|---|---|---|---|---|---|
| 2×/day-wet | 1 | 1404 | 2.22 | 1.93 | 1654 | 2.23 | 2.01 |
| (8am; 8pm) | 2 | 1356 | 2.36 | 2.04 | 1588 | 2.07 | 2.05 |
| Average/pig | | 172 | 2.29 | 1.99 | 203 | 2.15 | 2.03 |
| 3×/day-wet | 3 | 1400 | 2.14 | 1.86 | 1612 | 1.89 | 1.87 |
| (8am; 4pm; 12am) | 4 | 1392 | 2.06 | 1.84 | 1610 | 1.95 | 1.87 |
| Average/pig | | 174 | 2.10 | 1.85 | 201 | 1.92 | 1.87 |
| Average-wet | | | 2.20 | 1.92 | | 2.04 | 1.95 |
| Ad libitum | 5 | 1506 | 2.36 | 2.13 | 1700 | 1.73 | 2.03 |
| | 6 | 1448 | 2.12 | 1.97 | 1620 | 1.54 | 1.86 |
| Average/pig | | 185 | 2.24 | 2.05 | 208 | 1.63 | 1.94 |
| 3×/day-dry | 7 | 1424 | 2.20 | 1.89 | 1646 | 1.98 | 1.92 |
| (8am; 4pm; 12am) | 8 | 1404 | 2.14 | 1.92 | 1624 | 1.96 | 1.94 |
| Average/pig | | 177 | 2.17 | 1.91 | 204 | 1.97 | 1.93 |
| 2×/day-dry | 9 | 1372 | 1.91 | 1.82 | 1588 | 1.93 | 1.85 |
| (8am; 8pm) | 10 | 1408 | 2.46 | 2.02 | 1610 | 1.80 | 1.96 |
| Average/pig | | 174 | 2.19 | 1.92 | 200 | 1.87 | 1.91 |
| Average-dry | | | 2.18 | 1.91 | | 1.92 | 1.92 |

*Average Daily Gain

The results of the first trial test indicated a five percent faster gain using the two-feedings-per-day-with-wetted-feed regimen than with the ad libitum feeding regimen, as the hogs grew from 100 pounds to 200 pounds. At the same time, the hogs fed on the two-a-day-wet-feed program added each pound of weight gain with ten percent less feed.

The second trial test compared a wetted two-per-day feeding program with ad libitum feedings as hogs grew from 45 pounds to 210 pounds. The results are shown in Tables V and VI. Some comparisons of cumulative average daily gains between the regimen or programs are set out in Table VII.

TABLE V

Treatment 1 wet feed 2×/day

All data shown in pounds (one pound=approximately 0.45 kilograms)

| | A.D.G.* | (Cumm.) | Feed efficiency | (Cumm.) |
|---|---|---|---|---|
| Period 1 | 1.47 | - - - | 2.47 | - - - |
| Period 2 | 1.75 | 1.61 | 2.66 | 2.57 |
| Period 3 | 1.94 | 1.72 | 2.94 | 2.70 |
| Period 4 | 1.65 | 1.68 | 3.47 | 2.90 |
| Period 5 | 1.48 | 1.66 | 3.64 | 3.03 |
| Period 6 | 1.84 | 1.69 | 3.47 | 3.11 |
| Period 7 | 1.75 | 1.70 | 3.78 | 3.20 |

*Average Daily Gain.

Feed Efficiency is the number of pounds of feed consumed by the average hog in order to gain one pound of weight.

TABLE VI

Treatment 2

Dry ad libitum

All data shown in pounds (one pound=approximately 0.45 kilograms)

| | A.D.G.* | (Cumm.) | Feed efficiency | (Cumm.) | Temp. Ave. HI | LO |
|---|---|---|---|---|---|---|
| Period 1 | 1.54 | - - - | 2.36 | - - - | | |
| Period 2 | 1.68 | 1.60 | 2.67 | 2.52 | | |
| Period 3 | 1.90 | 1.71 | 2.62 | 2.56 | 76.2 | 59.7 |
| Period 4 | 1.56 | 1.67 | 3.44 | 2.75 | 85.9 | 64.4 |
| Period 5 | 1.54 | 1.64 | 3.46 | 2.89 | 89.4 | 69.0 |
| Period 6 | 1.66 | 1.64 | 3.51 | 2.99 | 83.5 | 59.0 |
| Period 7 | 1.61 | 1.65 | 3.79 | 3.09 | 80.0 | 62.9 |

*Average Daily Gain
Feed Efficiency is the number of pounds of feed consumed by the average hog in order to gain one pound of weight.

TABLE VII

Cumulative average daily gain in pounds—treatments 1 and 2 (one pound=approximately 0.45 kilograms)

| Period 1—2 | 1.61 | 1.60 |
|---|---|---|
| Period 1—3 | 1.72 | 1.71 |
| Period 1—4 | 1.68 | 1.67 |
| Period 2—7 | 1.73 | 1.65 |
| Period 3—7 | 1.68 | 1.58 |

The third test utilized modified equipment for more accurate testing. A programmed feed regimen was compared to an ad libitum program. In the programmed feed plan, hogs were fed three times per day until they weighed 100 pounds, and then were fed two times per day until they reached market weight. Results are shown in Table VIII.

### TABLE VIII
### Average daily gain by period
All date are shown in pounds per hog day (one pound=approximately 0.45 kilograms)

| | Pen | 1 | 2 | 3 | 4 | 5 | 6 | Cumulative average gain |
|---|---|---|---|---|---|---|---|---|
| | 1 | 1.81 | 1.90 | 1.75 | 1.64 | 1.59 | 1.61 | 1.72 |
| | 2 | 1.86 | 1.85 | 1.91 | 1.56 | 1.54 | 1.64 | 1.73 |
| Programmed | 3 | 1.96 | 1.71 | 1.86 | 1.92 | 1.52 | 1.76 | 1.79 |
| feeding | 4 | 1.83 | 1.90 | 1.69 | 1.96 | 1.58 | 1.76 | 1.79 |
| | 5 | 2.06 | 1.71 | 1.81 | 1.69 | 1.25 | 1.46 | 1.66 |
| Treatment average | | 1.90 | 1.81 | 1.80 | 1.75 | 1.50 | 1.65 | 1.74 |
| Average weight | | 103.6 | 129 | 154 | 178.9 | 200 | 223 | |
| Ad libitum | 6 | 1.68 | 1.63 | 1.72 | 1.70 | 1.41 | 1.24 | 1.56 |
| feeding | | | | | | | | |
| | 7 | 1.54 | 1.48 | 1.56 | 1.60 | 1.52 | 1.35 | 1.51 |
| | 8 | 1.80 | 1.87 | 1.95 | 1.63 | 1.75 | 1.72 | 1.79 |
| | 9 | 1.78 | 1.79 | 1.35 | 1.76 | 1.36 | 1.36 | 1.64 |
| | 10 | 2.00 | 1.87 | 1.81 | 1.65 | 1.38 | 1.56 | 1.71 |
| Treatment average | | 1.76 | 1.73 | 1.77 | 1.59 | 1.56 | 1.45 | 1.64 |
| Average weight | | 106 | 130.2 | 155 | 177.1 | 199 | 219.4 | |
| Pounds per hog. | | | | | | | | |

For this trial test period, the wet, twice-daily feeding program showed a three percent improvement in rate of gain over the *ad libitum* regime. However, the wet, twice daily feeding program showed a feed conversion rate three percent poorer than the *ad libitum* program. This poorer feed conversion rate was attributed to feed wastage from the programmed feed trough and other equipment problems. There was some indication of better results at heavier hog weights than at lighter weights.

Results for the programmed feeding regime used in the third trial test are also shown in Table IX.

### TABLE IX
### Pounds of feed consumed per day per pig per pound of weight gained
(one pound=approximately 0.45 kilograms)

| | Pen | Period 1 | 2 | 3 | 4 | 5 | 6 | 7 | 8 | 9 | 10 |
|---|---|---|---|---|---|---|---|---|---|---|---|
| | 1 | 5.51 | 3.04 | 6.24 | 3.28 | 5.72 | 3.27 | 6.11 | 3.72 | 6.19 | 3.89 |
| | 2 | 5.46 | 2.94 | 6.16 | 3.33 | 6.04 | 3.16 | 6.60 | 4.23 | 6.43 | 4.17 |
| Programmed | 3 | 5.55 | 2.83 | 6.17 | 3.61 | 5.95 | 3.20 | 6.70 | 3.49 | 6.52 | 4.29 |
| feeding | 4 | 5.46 | 2.98 | 6.04 | 3.18 | 6.01 | 3.56 | 6.68 | 3.41 | 6.58 | 4.16 |
| | 5 | 5.98 | 2.90 | 6.67 | 3.90 | 6.02 | 3.32 | 6.94 | 4.11 | 6.49 | 5.19 |
| Average | | 5.59 | 2.94 | 6.26 | 3.46 | 5.95 | 3.30 | 6.61 | 3.79 | 6.44 | 4.34 |
| | 6 | 5.43 | 3.23 | 5.63 | 3.45 | 6.21 | 3.61 | 7.10 | 4.18 | 6.35 | 4.50 |
| Ad libitum | 7 | 5.42 | 3.52 | 5.80 | 3.84 | 5.58 | 3.58 | 7.28 | 4.55 | 5.85 | 3.85 |
| feeding | 8 | 5.13 | 2.85 | 5.80 | 3.15 | 6.70 | 3.43 | 7.68 | 4.71 | 6.61 | 3.78 |
| | 9 | 5.03 | 2.83 | 5.89 | 3.31 | 6.03 | 3.37 | 6.74 | 4.99 | 6.73 | 3.83 |
| | 10 | 6.69 | 3.35 | 6.25 | 3.34 | 6.43 | 3.55 | 6.74 | 4.08 | 6.03 | 4.37 |
| Average | | 5.54 | 3.16 | 5.87 | 3.42 | 6.18 | 3.51 | 7.11 | 4.50 | 6.31 | 4.06 |

The programmed feeding regime resulted in a six percent faster rate of weight gain and a six percent better feed conversion rate than did the control *ad libitum* feeding plan.

A fourth trial test utilized automated equipment and the same feeding regime. A control group was fed on an *ad libitum* regime. Results are shown in Table X.

TABLE X

| | Experimental group | | | Control group | | |
|---|---|---|---|---|---|---|
| | Average daily gain | Feed per pig per day | Pounds feed per pound gain | Average daily gain | Feed per pig per day | Pounds feed per pound gain |
| Period #1 5/17—5/31 | 1.33 | 3.39 | 2.55 | 1.42 | 4.28 | 3.01 |
| Period #2 5/31—6/14 | 1.18 | 4.11 | 3.48 | 1.41 | 3.70 | 2.63 |
| Period #3 6/14—6/28 | 1.81 | 4.55 | 2.52 | 1.69 | 4.75 | 2.76 |
| Period #4 6/28—7/12 | 1.53 | 4.89 | 3.19 | 1.57 | 5.17 | 3.29 |
| Period #5 7/2—7/26 | 1.62 | 5.19 | 3.20 | 1.55 | 5.88 | 3.79 |
| Period #6 7/26—8/9 | 1.71 | 5.81 | 3.40 | 1.60 | 6.05 | 3.78 |
| Average | 1.53 | 4.58 | 2.99 | 1.54 | 4.97 | 3.22 |

(one pound=approximately 0.45 kilograms)

Malfunctions inadvertently experienced during the trial test left the hogs on the programmed regime without feed at times. As a result, the rates of hog weight gain were about equal. However, the hogs on programmed regime had a feed conversion rate eight percent better than the hogs fed on the ad libitum regime.

By using this method of hog feeding, it has been found that hogs generally gain weight more rapidly and require less feed than was previously necessary. These improvements mean direct improvement in profits to hog raising operations.

**Claims**

1. A method of feeding hogs comprising supplying food to the hogs for a limited feeding period of time and thereafter denying all food to the hogs for a limited feedless period of time, characterised in that an unlimited amount of food and water are supplied during said feeding period and in that said feeding period extends for approximately 2 hours, after which all food is denied to the hogs for said limited feedless period of time.

2. A method of feeding hogs according to Claim 1 including the steps of providing all the hogs with all the feed they care to consume for at least two limited feeding periods of time per day, and denying all feed to all the hogs for at least two feedless periods of time per day.

3. A method of feeding hogs according to Claim 1 including the steps of providing all the hogs with all the feed they care to consume for at least three limited feeding periods of time per day, and denying all feed to all the hogs for at least three feedless periods of time per day.

4. A method of feeding hogs according to Claim 3 wherein at least one feeding period extends for approximately two hours, and wherein at least one feedless period extends for approximately six hours.

5. A method of feeding hogs according to Claim 1 wherein said feeding periods and feedless periods are provided for a plurality of consecutive days, and wherein said method includes the steps of beginning and ending said feeding periods and feedless periods at the same time each day.

6. A method of feeding hogs according to Claim 1 wherein said feedless period is longer in time duration than said feeding period.

7. A method of feeding hogs according to Claim 2 wherein each of said feedless periods is longer in time duration than any of said feeding periods.

8. A method of feeding hogs according to Claim 1 including the additional step of denying all water to all the hogs during said feedless periods.

9. A method of feeding hogs according to Claim 1 wherein the steps of providing all the hogs with all the feed they care to consume during three separated, limited feeding periods per day, and thereafter denying all feed to all the hogs for three limited feedless periods per day, are performed until the hogs weigh 45.5 kg (100 pounds), and the method thereafter including the steps of providing all the hogs with all the feed they care to consume for two separated limited feeding periods of time per day and thereafter denying all feed to all the hogs for two limited feedless periods of time per day until the hogs reach market weight.

10. A method of feeding hogs according to Claim 9 including the step of providing all the water to said hogs which they care to consume only during said feeding periods.

9

11. A method according to Claim 9 including the steps of providing the feed to said hogs at a given location (27—29), providing the water to said hogs at a given location (57—59), above the feeding location (27—29), and collecting water spilled from the water delivery location (57—59) at the hog feeding location (27—29) so as to form a water-feed gruel for consumption by the hogs.

12. A method of feeding hogs according to Claim 1 including the steps of commencing to make drinking water available to all the hogs before the feeding period begins, providing all the hogs with all the water they care to consume during the feeding period, and halting the availability of drinking water to the hogs after the feeding period ends.

13. Apparatus for feeding hogs by the method according to any one of the preceding claims comprising the combination of feed trough means (27—29) at said location for containing food to be consumed by the hogs, high capacity feed delivery means (15) for delivering feed to the trough, feed shut-off means (30) interposed between the feed trough means and the feed delivery means for alternately delivering and preventing delivery of feed to the feed trough, and timer means connected to the feed shut-off means for operating the latter at predetermined times, water nozzle means (66) located above the feed trough means, water delivery means (50) for delivering water to the water nozzle means, water shut-off means (52) interposed between the water nozzle means and the water delivery means for alternately permitting and preventing delivery of water to the water nozzle means, and timer means (53) connected to said water shut-off means for operating the water shut-off means at predetermined times, characterised in that the timer means (31, 53) are operable to open the feed shut-off means (30) and water shut-off means (52) respectively to permit an unlimited amount of food and water to be supplied for a limited feeding period of time extending for approximately 2 hours and thereafter to close said shut-off means (30) in order to prevent delivery of all feed to the hogs for a limited feedless period of time.

14. Apparatus according to Claim 13 wherein said feed delivery means (15) comprises a conveyor means (15) and a drop tube means (17—19).

15. Apparatus according to Claim 14 wherein said water nozzle means (66) comprises spray nozzles for spraying water atop feed delivered to said feed trough means.

16. Apparatus according to Claim 14 wherein said water nozzles (66) comprise demand-actuated nozzles for delivering water directly to the hogs when the nozzles are actuated by the hogs.

**Patentansprüche**

1. Verfahren zur Fütterung von Hausschweinen, bei dem die Hausschweine eine begrenzte Fütterungs-Zeitperiode mit Futter versorgt werden und danach für eine begrenzte futterlose Zeitperiode jegliches Futter verweigert wird, dadurch gekennzeichnet, daß eine unbegrenzte Futter- und Wassermenge während der Fütterungsperiode zugeführt wird und daß sich die Fütterungsperiode über ungefähr zwei Stunden erstreckt, und daß den Hausschweinen jegliches Futter während der begrenzten futterlosen Zeitperiode verweigert wird.

2. Verfahren zur Fütterung von Hausschweinen nach Anspruch 1, dadurch gekennzeichnet, daß sämtliche Hausschweine mindestens zwei begrenzte Fütterungs-Zeitperioden pro Tag mit der Futtermenge versorgt werden, die sie zu sich nehmen möchten und daß sämtlichen Hausschweinen das Futter während mindestens zwei futterloser Zeitperioden pro Tag verweigert wird.

3. Verfahren zur Fütterung von Hausschweinen nach Anspruch 1, dadurch gekennzeichnet, daß sämtliche Hausschweine mindestens drei begrenzte Fütterungs-Zeitperioden pro Tag mit der Futtermenge versorgt werden, die sie zu sich nehmen möchten und daß sämtlichen Hausschweinen das Futter während mindestens drei futterloser Zeitperioden pro Tag verweigert wird.

4. Verfahren zur Fütterung von Hausschweinen nach Anspruch 3, dadurch gekennzeichnet, daß sich mindestens eine Fütterungsperiode über ungefähr zwei Stunden erstreckt und daß sich mindestens eine futterlose Zeitperiode über ungefähr sechs Stunden erstreckt.

5. Verfahren zur Fütterung von Hausschweinen nach Anspruch 1, dadurch gekennzeichnet, daß die Fütterungsperioden und futterlosen Perioden an mehreren aufeinanderfolgenden Tagen eingehalten werden und daß der Anfang und das Ende der Fütterungsperioden und der futterlosen Perioden jeden Tag auf denselben Zeitpunkt gelegt wird.

6. Verfahren zur Fütterung von Hausschweinen nach Anspruch 1, dadurch gekennzeichnet, daß die futterlose Periode länger andauert als die Fütterungsperiode.

7. Verfahren zur Fütterung von Hausschweinen nach Anspruch 2, dadurch gekennzeichnet, daß jede futterlose Periode länger andauert als jede Fütterungsperiode.

8. Verfahren zur Fütterung von Hausschweinen nach Anspruch 1, dadurch gekennzeichnet, daß zusätzlich sämtlichen Hausschweinen während der futterlosen Perioden jegliches Wasser verweigert wird.

9. Verfahren zur Fütterung von Hausschweinen nach Anspruch 1, dadurch gekennzeichnet, daß sämtliche Hausschweine so lange über drei getrennte, begrenzte Fütterungsperioden pro Tag mit so viel Futter versorgt werden wie sie möchten und danach sämtlichen Hausschweinen jegliches Futter während drei gebrenzter futterloser Perioden pro Tag verweigert wird bis die Hausschweine 45,5 kg wiegen und daß danach sämtliche Hausschweine so lange über zwei getrennte, begrenzte Fütterungs-Zeitperioden pro Tag mit soviel Futter versorgt werden, wie sie möchten und danach sämtlichen Hausschweinen jegliches Futter während zwei begrenzter futterloser Zeitperioden pro Tag verweigert wird bis die Hausschweine Schlachtgewicht erreichen.

10. Verfahren zur Fütterung von Hausschweinen nach Anspruch 9, dadurch gekennzeichnet, daß den Hausschweinen nur während der Fütterungsperioden soviel Wasser zur Verfügung gestellt wird, wie sie möchten.

11. Verfahren zur Fütterung von Hausschweinen nach Anspruch 9, dadurch gekennzeichnet, daß die Hausschweine an einer bestimmten Futterstelle (27—29) mit Futter und an einer oberhalb der Futterstelle (27—29) angeordneten Stelle (57—59) mit Wasser versorgt werden und daß das von der Wasserabgabestelle (57—59) überlaufende Wasser in der Hausschwein-Futterstelle (27—29) gesammelt wird und so ein Wasser-Futter-Gemisch zum Verbrauch für die Hausschweine gebildet wird.

12. Verfahren zur Fütterung von Hausschweinen nach Anspruch 1, dadurch gekennzeichnet, daß zunächst sämtlichen Hausschweinen Trinkwasser zur Verfügung gestellt wird, bevor die Fütterungsperiode beginnt, daß sämtlichen Hausschweinen während der Fütterungsperiode soviel Wasser zur Verfügung gestellt wird, wie sie möchten und daß nach dem Ende der Fütterungsperiode den Hausschweinen weiterhin Trinkwasser zur Verfügung gestellt wird.

13. Vorrichtung zur Fütterung von Hausschweinen nach dem Verfahren gemäß einem der vorstehenden Ansprüche mit Futtertrögen (27—29) an den Stellen, die das von den Hausschweinen zu verzehrende Futter enthalten, einer Futter-Abgabevorrichtung (15) hoher Kapazität zur Abgabe von Futter an die Futtertröge, einer zwischen die Futtertröge und der Futter-Abgabevorrichtung angeordneten Futter-Abschaltvorrichtung (30), die abwechselnd die Futterabgabe bewirkt und verhindert, einem mit der Futter-Abschaltvorrichtung verbundenen Zeitgeber (31), der die Futter-Abschaltvorrichtung zu vorbestimmten Zeiten ansteuert, oberhalb der Futtertröge angeordnete Wasser-Ausströmöffnungen (66), einer Wasser-Zufuhreinrichtung (50) zur Zufuhr von Wasser zu den Wasser-Ausströmöffnungen, einer zwischen den Wasser-Ausströmöffnungen und der Wasser-Zufuhreinrichtung angeordneten Wasser-Abschaltvorrichtung (52), die abwechselnd die Abgabe von Wasser an die Wasser-Ausströmöffnungen ermöglicht und verhindert und einem mit der Wasser-Abschaltvorrichtung verbundenen Zeitgeber (53), der die Wasser-Abschaltvorrichtung zu vorbestimmten Zeiten betätigt, dadurch gekennzeichnet, daß die Zeitgeber (31, 53) die Futter-Abschaltvorrichtung (30) bzw. die Wasser-Abschaltvorrichtung (52) öffnen und die Zufuhr einer unbegrenzten Futter- und Wassermenge über eine begrenzte Fütterungs-Zeitperiode gestatten, die sich über ungefähr zwei Stunden erstreckt und danach die Futter-Abschaltvorrichtung (30) schließen und die Abgabe von Futter an alle Hausschweine für eine begrenzte futterlose Zeitperiode verhindern.

14. Vorrichtung nach Anspruch 13, dadurch gekennzeichnet, daß die Futter-Abgabevorrichtung (15) eine Fördereinrichtung (15) und Fallrohre (17—19) aufweist.

15. Vorrichtung nach Anspruch 14, dadurch gekennzeichnet, daß die Wasser-Ausströmöffnungen (66) Spritzdüsen aufweisen, die Wasser von oben auf das an die Futtertröge abgegebene Futter sprühen.

16. Vorrichtung nach Anspruch 14, dadurch gekennzeichnet, daß die Wasser-Ausströmöffnungen (66) bedarfgesteuerte Düsen zur Abgabe von Wasser unmittelbar an die Hausschweine aufweisen, wenn die Abgabedüsen von den Hausschweinen betätigt werden.

## Revendications

1. Procédé pour alimenter des porcs, consistant à fournir de la nourriture aux porcs pendant une période d'alimentation limitée et, ensuite, à refuser toute nourriture aux porcs pendant und période d'absence d'alimentation limitée, caractérisé en ce que des quantités illimitées de nourriture et d'eau sont fournies pendant ladite période d'alimentation qui dure approximativement 2 heures, après quoi toute nourriture est refusée aux porcs pendant ladite période d'absence d'alimentation limitée.

2. Procédé d'alimentation des porcs selon la revendication 1, comprenant les phases consistant à fournir à tous les porcs tous les aliments qu'il leur plaît de consommer pendant au moins deux périodes d'alimentation limitées par jour et à refuser tout aliment à tous les porcs pendant au moins deux périodes d'absence d'alimentation par jour.

3. Procédé d'alimentation des porcs selon la revendication 1 comprenant les phases consistant à fournir à tous les porcs tous les aliments qu'il leur plaît de consommer pendant au moins trois périodes d'alimentation limitées par jour et à refuser tout aliment à tous les porcs pendant au moins trois périodes d'absence d'alimentation par jour.

4. Procédé d'alimentation des porcs selon la revendication 3, dans lequel au moins une période d'alimentation dure approximativement deux heures et dans lequel au moins une période d'absence d'alimentation dure approximativement six heures.

5. Procédé d'alimentation des porcs selon la revendication 1, dans lequel lesdites périodes d'alimentation et périodes d'absence d'alimentation sont réalisées pendant une pluralité de jours consécutifs et dans lequel ledit procédé comprend des phases consistant à faire débuter et terminer lesdites périodes d'alimentation et périodes d'absence d'alimentation à la même heure chaque jour.

## 0 023 760

6. Procédé d'alimentation des porcs selon la revendication 1, dans lequel ladite période d'absence d'alimentation est plus longue en durée que ladite période d'alimentation.

7. Procédé d'alimentation des porcs selon la revendication 2, dans lequel chacune desdites périodes d'absence d'alimentation est plus longue en durée qu'une quelconque desdites périodes d'alimentation.

8. Procédé d'alimentation des porcs selon la revendication 1, comprenant la phase additionnelle consistant à refuser toute eau à tous les porcs pendant lesdites périodes d'absence d'alimentation.

9. Procédé d'alimentation des porcs selon la revendication 1, dans lequel les phases consistant à fournir à tous les porcs tous les aliments qu'il leur plaît de consommer pendant trois périodes d'alimentation limitées et séparées par jour et, ensuite, à refuser tout aliment à tous les porcs pendant trois périodes limitées d'absence d'alimentation par jour, sont réalisées jusqu'à ce que les porcs pèsent 45,5 kg (100 livres) et en ce que le procédé comprend ensuite les phases consistant à fournir à tous les porcs tous les aliments qu'il leur plaît de consommer pendant deux périodes d'alimentation limitées et séparées par jour et, ensuite, à refuser tout aliment à tous les porcs pendant deux périodes limitées d'absence d'alimentation par jour, jusqu'à ce que les porcs atteignent leur poids de vente.

10. Procédé d'alimentation des porcs selon la revendication 9, comprenant la phase consistant à fournir aux porcs toute l'eau qu'il leur plaît de consommer uniquement pendant lesdites périodes d'alimentation.

11. Procédé selon la revendication 9, comprenant les phases consistant à fournir les aliments auxdits porcs en un point donné (27 à 29), à fournir l'eau auxdits porcs en un point donné (57 à 59) situé au-dessus du point d'alimentation (27 à 29) et à receuillir l'eau projetée du point de fourniture d'eau (57 à 59) au point d'alimentation des porcs (27 à 29) de manière à former une bouillie eau-aliments destinés à être consommée par les porcs.

12. Procédé d'alimentation des porcs selon la revendication 1, comprenant les phases consistant à commencer à faire boire l'eau mise à la disposition de tous les porcs avant que ne commence la période d'alimentation, à fournir à tous les porcs toute l'eau qu'il leur plaît de consommer pendant la période d'alimentation et à interrompre la mise de l'eau potable à la disposition des porcs après la fin de la période d'alimentation.

13. Dispositif pour alimenter les porcs par un procédé selon l'une quelconque des revendications précédentes, comprenant la combinaison de moyens formant auges à aliments (27 à 29) auxdits points destinés à contenir la nourriture devant être consommée par les porcs, des moyens distributeurs d'aliments à haute capacité (15) destinés à distribuer les aliments à l'auge, ces moyens d'arrêt des aliments (30) interposés entre les moyens formant auges à aliments et les moyens distributeurs d'aliments poiur distribuer et empêcher alternativement la distribution d'aliments à l'auge à aliments et des moyens de minutage reliés aux moyens d'arrêt des aliments pour faire manoeuvrer ces derniers à des instants prédéterminés, des moyens formant buses d'eau (66) placés au-dessus des moyens formant auges à aliments, des moyens de distribution d'eau (50) destinés à distribuer l'eau aux moyens formant buses d'eau, des moyens d'arrêt de l'eau (52) interposés entre les moyens formant buses d'eau et les moyens de distribution d'eau pour permettre et empêcher alternativement la distribution de l'eau aux moyens formant buses d'eau et des moyens de minutage (53) reliés auxdits moyens d'arrêt de l'eau pour faire manoeuvrer les moyens d'arrêt de l'eau à des instants prédéterminés, caractérisé en ce que les moyens de minutage (31, 53) peuvent entrer en action pour ouvrir les moyens d'arrêt des aliments (30) et les moyens d'arrêt de l'eau (52) respectivement pour permettre de fournir une quantité illimitée d'aliments et d'eau pendant une période d'alimentation limitée qui dure approximativement deux heures et, ensuite, fermer lesdits moyens d'arrêt (30) afin d'empêcher la distribution de tout aliment aux porcs pendant une période d'absence d'alimentation limitée.

14. Dispositif selon la revendication 13, dans lequel lesdits moyens de distribution d'aliments (15) comprennent un transporteur (15) et des moyens formant tubes de descente (17 à 19).

15. Dispositif selon la revendication 14, dans lequel lesdits moyens formant buses d'eau (66) comprennent des buses de pulvérisation destinées à pulvériser l'eau audessus des aliments distribués auxdits moyens formant auges à aliments.

16. Dispositif selon la revendication 14, dans lequel lesdites buses d'eau (66) comprennent des buses actionnées à la demande servant à distribuer l'eau directement aux porcs lorsque les buses sont actionnées par les porcs.

Fig.1.

WATER IN

0 023 760

Fig. 2

Fig. 3

Fig. 4